# EUROPÄISCHE PATENTSCHRIFT

(11) **EP 0 995 037 B1**
(45) Veröffentlichungstag und Bekanntmachung des Hinweises auf die Patenterteilung: **01.10.2003**
(21) Anmeldenummer: 98940166.6
(22) Anmeldetag: 07.07.1998
(51) Int. Cl.: F04C 29/00, F04C 29/04

(54) **VERDICHTERANLAGE**
COMPRESSOR ASSEMBLY
ENSEMBLE A COMPRESSEUR

(30) Priorität: 10.07.1997 DE 19729498
(43) Veröffentlichungstag der Anmeldung: 26.04.2000
(73) Patentinhaber: KT Kirsten Technologie-Entwicklung GmbH, 09390 Gornsdorf (DE)
(72) Erfinder: KIRSTEN, Günter, D-08451 Crimmitschau (DE)
(74) Vertreter: Selting, Günther, Dipl.-Ing.
(86) Internationale Anmeldenummer: EP9804207
(87) Internationale Veröffentlichungsnummer: WO99002863

(56) Entgegenhaltungen:
- EP-A- 0 394 777
- WO-A-86/07416
- DE-A- 4 447 097

## Beschreibung

Die Erfindung bezieht sich auf eine Verdichteranlage mit einem Verdichter mit Wassereinspritzkühlung in einem Kühlwasserkreislauf.

Derartige Verdichteranlagen werden dazu eingesetzt, gasförmige Medien, insbesondere Luft, zu komprimieren und als Druckgas zur Verfügung zu stellen. Zur Abdichtung, Schmierung und Kühlung des Verdichters wird Wasser verwendet, das gegenüber Ö1 den Vorteil besitzt, nicht umweltbelastend oder gesundheitsgefährdend zu sein. In DE 44 47 097 ist eine wassergekühlte Verdichteranlage beschrieben, bei der der Verdichter als Schraubenverdichter ausgebildet ist. Das Kühlwasser wird im Bereich der Rotore des Verdichters eingespritzt und nach dem Austritt aus dem Verdichter von dem komprimierten Gas wieder getrennt. Das im Verdichter erwärmte Wasser wird anschließend einer Kühlvorrichtung zugeführt. Das abgekühlte Kühlwasser wird dann gefiltert und wieder dem Verdichter zugeführt. Bei diesem Prozeß kann durch Verdunstung von Kühlwasser bzw. Aufnahme von Luftfeuchtigkeit in das Kühlwasser eine Veränderung verschiedener Parameter des Kühlwassers bewirkt werden: Steigt durch Kühlwasserverdunstung der relative Salzgehalt des Wassers, fallen vermehrt Sedimente aus, die in den engen Dichtspalten des Verdichters und an den Dichtringen Beschädigungen und Zerstörungen bewirken können. Die Sedimentbildung wird durch eine Polarisationsvorrichtung gering gehalten, nicht jedoch die Salzgehaltsteigerung vermieden. Fällt dagegen durch Luftfeuchtigkeitsaufnahme der Salzgehalt des Kühlwassers, verringert sich die Pufferfähigkeit des Kühlwassers zur Absorption von freier Kohlensäure. Freie Kohlensäure im Kühlwasser, die nicht abgepuffert (gebunden) wird, ist aber sehr aggressiv und korrosiv. Auch der pH-Wert des Kühlwassers kann durch Verdunstung von Kühlwasser, Aufnahme von Luftfeuchtigkeit in das Kühlwasser oder Aufnahme von Kupfer- oder Eisenionen verschoben werden, so daß das Kühlwasser korrosiv wirkt.

Aus DE 821 993 und US 722 524 sind Verdichter bekannt, bei denen zur Kühlung destilliertes Wasser verwendet wird. Destilliertes Kühlwasser ist sehr teuer und ist bezüglich seines pH-Wertes sehr empfindlich.

Aufgabe der Erfindung ist es, in einer Verdichteranlage mit Wassereinspritzkühlung die Wasserqualität zu verbessern.

Die Aufgabe wird erfindungsgemäß gelöst durch die Merkmale des Patentanspruchs 1.

In der erfindungsgemäßen Verdichteranlage ist in dem Kühlwasserkreislauf eine Meßvorrichtung zur Bestimmung des Leitfähigkeitswertes des Kühlwassers und eine Wasserlieferquelle zur Lieferung von nicht-entsalztem Wasser und von entsalztem Wasser, also von nicht-entionisiertem und von entionisiertem Wasser, vorgesehen. Eine Regelvorrichtung veranlaßt bei Überschreitung eines oberen Leitfähigkeits-Grenzwertes die Einleitung von entsalztem Wasser und bei Unterschreitung eines unteren Leitfähigkeits-Grenzwertes die Einleitung von nicht-entsalztem Wasser in den Kühlwasserkreislauf. Der Salzgehalt des Kühlwassers wird also derart geregelt, daß die Leitfähigkeit des Kühlwassers stets in einem vorgegebenen Bereich bleibt. Da die Leitfähigkeit auch ein ungefähres Maß für den pH-Wert des Wassers darstellt, kann durch die Regelung der Leitfähigkeit auch der pH-Wert des Kühlwassers so geregelt werden, daß er nicht in den sauren oder alkalischen Bereich verschoben wird, sondern im neutralen Bereich bleibt.

Bei Unterschreitung des unteren Leitfähigkeits-Grenzwertes wird dem Kühlwasser nicht-entsalztes Wasser zugegeben, das die Leitfähigkeit des Kühlwassers wieder erhöht, so daß der Leitfähigkeitswert wieder über den unteren Leitfähigkeits-Grenzwert steigt. Durch die Regelung der Kühlflüssigkeits-Leitfähigkeit oberhalb eines unteren Leitfähigkeits-Grenzwertes wird ein starker Abfall des pH-Wertes des Wassers verhindert. Der pH-Wert des Wassers wird dadurch beispielsweise oberhalb eines pH-Wertes von 6,5 gehalten. Das Kühlwasser ist daher nicht aggressiv, so daß die kühlwasserbedingte Korrosion innerhalb des Kühlmittelkreislaufs stark reduziert wird.

Bei Überschreitung des oberen Leitfähigkeits-Grenzwertes wird dem Kühlwasser entsalztes Wasser zugeführt. Dadurch wird die Leitfähigkeit des Kühlwassers gesenkt. Nach Unterschreiten des oberen Leitfähigkeits-Grenzwertes wird die Zuführung von entsalztem Wasser wieder gestoppt. Durch die in dem Kühlwasser gelösten Salze kann das Kühlwasser Kohlendioxyd aufnehmen, das beim Verdichten von Luft vom Kühlwasser aufgenommen wird und sehr korrosiv wirkt. Das Kühlwasser kann jedoch nicht beliebig salzhaltig sein, da ab einer bestimmten Salzkonzentration eine Sedimentierung der Salze auftritt, d.h. in dem Kühlwasser bilden sich ab einer bestimmten Salzkonzentration Partikel, die an Dichtspalten, Lagerdichtungen, in Gleitlagern etc. zu Zerstörungen führen können. Daher muß der Salzgehalt des Kühlwassers begrenzt sein, was durch den oberen Leitfähigkeits-Grenzwert bestimmt wird.

Durch die Regelung der Kühlwasserleitfähigkeit innerhalb eines festgelegten Leitfähigkeitsbereiches werden also zwei Effekte erzielt: Zum einen wird eine Übersäuerung des Kühlwassers vermieden, wodurch wiederum Korrosion innerhalb des Kühlwasserkreislaufs vermieden wird. Zum anderen wird der Salzgehalt des Kühlwassers unterhalb eines Grenzwertes gehalten, so daß keine Sedimentierung auftritt, wodurch wiederum die mechanische Beschädigung oder Zerstörung beweglicher Teile innerhalb des Kühlwasserkreislaufes vermieden wird. Dadurch können Verdichteranlagen realisiert werden, bei denen weniger korrosionsbeständige Materialien im Kühlwasserkreislauf und für den Verdichter verwendet werden können. Da das Kühlwasser annähernd frei von Sedimenten ist, kann ein Verdichter mit sehr engen Dichtspalten und daher beispielsweise auch mit Gleitlagern realisiert werden. Mit der erfindungsgemäßen Kühlwasserregelungsvorrichtung werden also die Voraussetzungen dafür geschaffen, die Effektivität und die Lebensdauer einer Gas-Verdichteranlage zu erhöhen.

Vorzugsweise weist die Wasserlieferquelle ein Entsalzungsgerät auf, dem nicht-entsalztes Wasser zugeführt wird. Ferner ist eine Umgehungsleitung vorgesehen, die das Entsalzungsgerät überbrückt, und es sind Ventile vorgesehen, die entweder das Entsalzungsgerät oder die Umgehungsleitung mit dem Verdichter verbinden. Die Ventile sind so geschaltet, daß in dem Entsalzungsgerät entsalztes Wasser dem Verdichter bzw. dem Kühlkreislauf zugeführt wird, wenn ein unterer Leitfähigkeits-Grenzwert unterschritten wird. Soll nicht-entsalztes Wasser dem Kühlkreislauf zugeführt werden, werden die Ventile so geschaltet, daß das nicht-entsalzte Wasser durch die Umgehungsleitung an dem Entsalzungsgerät vorbeigeleitet und nicht-entsalzt dem Verdichter bzw. dem Kühlwasserkreislauf zugeführt wird. Das dem Entsalzungsgerät bzw. der Umgehungsleitung zugeführte nicht-entsalzte Wasser kann beispielsweise Trinkwasser aus dem Trinkwassernetz sein. Vorzugsweise ist das Entsalzungsgerät als Ionenaustauscher oder Umkehrosmose-Vorrichtung ausgebildet.

Die gesamte Regelung der Leitfähigkeit kann in Form einer Zweipunkt-Regelung, oder aber auch kontinuierlich, erfolgen. Die Leitfähigkeit kann vorzugsweise in einem Bereich von 10 bis 20 µS/cm bei 25 °C geregelt werden.

In einer bevorzugten Ausgestaltung ist eine Rücklaufleitung von dem Kühlwasserkreislauf zu einem Wasserlieferquellen-Zulauf vorgesehen, durch die Wasser des Kühlwasserkreislaufs der Wasserlieferquelle zugeführt werden kann. Das aus dem Kühlwasserkreislauf kommende Kühlwasser kann in dem Entsalzungsgerät der Wasserlieferquelle bei Bedarf entsalzt werden. Es handelt sich dann um einen geschlossenen Kühlmittelkreislauf, dessen Kühlwasser in einem zum Verdichter parallelen Leitungszweig in dem Entsalzungsgerät entsalzt und dem Kühlwasserkreislauf wieder zugeführt wird. Das Kühlwasser wird also wieder aufbereitet. Durch Verzicht auf die Entsalzung von von außen zugeführtem Wasser, beispielsweise Trinkwasser, wird das Entsalzungsgerät geschont, da das Wasser des Kühlwasserkreislaufs in der Regel nur relativ gering entsalzt werden muß.

In einer bevorzugten Ausgestaltung der Erfindung wird das Wasser der Wasserlieferquelle in einen Gasansaugkanal des Verdichters eingeleitet. Das von der Wasserlieferquelle kommende Wasser wird also nicht unmittelbar in den Kühlwasserkreislauf eingeleitet, der ungefähr den Druck des vom Verdichter verdichteten Gases aufweist, sondern wird in den Gasansaugkanal des Verdichters eingeleitet, in dem annähernd atmosphärischer Druck herrscht. Dadurch kann auf eine Kompression des Wassers der Wasserlieferquelle zur Einspeisung in den Kühlwasserkreislauf verzichtet werden.

In einer bevorzugten Ausgestaltung weist der Verdichter Gleitlager auf, wobei das Wasser der Wasserlieferquelle direkt in die Gleitlager eingespritzt wird. Die Einspritzung von Wasser in die Gleitlager wird vor dem Anlaufen des Verdichters vorgenommen. Dadurch ist sichergestellt, daß die Gleitlager beim Anlaufen des Verdichters mit Wasser gefüllt, also geschmiert sind. Eine verschleißträchtige Mischreibung, also trockene Reibung und Gleitreibung zusammen, beim Anlaufen des Verdichters kann dadurch vermieden werden. Nach dem Anlaufen des Verdichters steigt der Druck im Kühlkreislauf auf den Verdichterdruck an. Aus diesem Grund kann das von der Wasserlieferquelle kommende Wasser, das nur einen geringen Überdruck aufweist, nicht mehr direkt in den Kühlwasserkreislauf eingeleitet werden. Daher wird das von der Wasserlieferquelle kommende Wasser nach dem Anlaufen des Verdichters in den Gasansaugkanal des Verdichters eingeleitet.

In einer bevorzugten Ausgestaltung ist im Kühlwasserkreislauf ein Temperatursensor für die Temperaturkompensation der Leitfähigkeitsmessung vorgesehen. Da die Leitfähigkeit von Wasser sehr stark temperaturabhängig ist, ist für eine normierte Messung eine Temperaturkompensation der gemessenen Leitfähigkeit erforderlich. Dazu ist in der Nähe der Leitfähigkeits-Meßstelle der Temperatursensor angeordnet.

Vorzugsweise ist die Wasserlieferquelle an das Trinkwassernetz angeschlossen. Dadurch steht praktisch an jedem Aufstellungsort für die Speisung der Wasserlieferquelle nicht-entsalztes Wasser zur Verfügung, mit dem der Salzgehalt und dadurch die Leitfähigkeit des Kühlwassers erhöht werden kann. Der Systemwasserdruck aus dem Trinkwassernetz ist dabei ausreichend, das Wasser der Wasserlieferquelle zuzuführen, und nicht-entsalzt oder entsalzt in den Gasansaugkanal, bzw. vor Anlauf des Verdichters in den Verdichter, einzuspritzen.

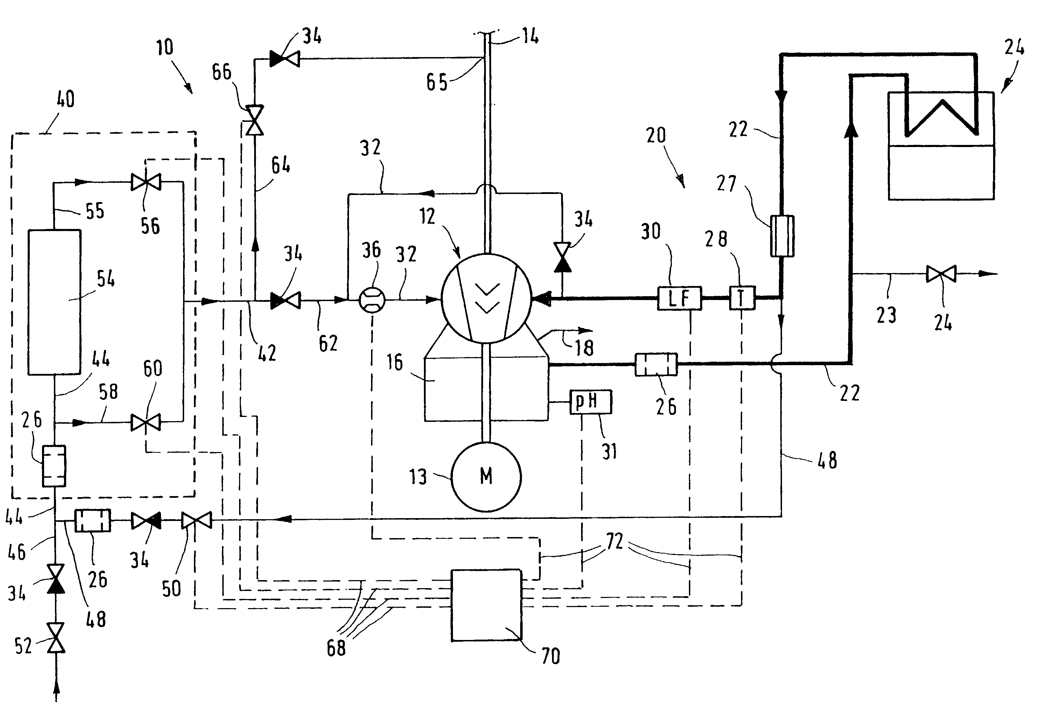

Im folgenden wird unter Bezugnahme auf die Zeichnung ein Ausführungsbeispiel der Erfindung näher erläutert.

Die Figur zeigt eine Verdichteranlage 10 zur Erzeugung ölfreier Druckluft. Die Verdichteranlage 10 weist einen von einem Elektromotor 13 angetriebenen Verdichter 12 auf, der als wassereinspritzgekühlter Schraubenverdichter ausgebildet ist. Der Schraubenverdichter 12 saugt über einen Ansaugkanal 14 Luft an und komprimiert diese auf ungefähr 8 bis 10 bar. Die in dem Verdichter 12 komprimierte Luft wird in einen Absetzbehälter 16 geleitet, aus dem sie über eine Druckluftleitung 18 zur weiteren Nutzung entnommen werden kann.

Die Verdichteranlage 10 weist einen Kühlwasserkreislauf 20 auf, in dem das den Verdichter 12 kühlende Kühlwasser gekühlt und gereinigt wird. Das Kühlwasser wird während der Verdichtung im Bereich der Rotore des Schraubenverdichters 12 über Wassereinspritzdüsen eingespritzt, um Dichtspalte in dem Verdichter 12 abzudichten und die bei der Luftkompression entstehende Wärme aufzunehmen und abzuführen.

In dem Absetzbehälter 16 wird das Kühlwasser von der Druckluft wieder getrennt und über eine Kühlwasserleitung 22 zu einer Kühlvorrichtung 24 geleitet. Im Verlauf der Kühlwasserleitung 22 zwischen dem Absetzbehälter 16 und der Kühlvorrichtung 24 ist ein Partikelfilter 26 angeordnet, in dem Verunreinigungen und feine Partikel aus dem Kühlwasser herausgefiltert werden. Das Kühlwasser fließt weiter zu der Kühlvorrichtung 24, in der das in dem Schraubenverdichter 12 erwärmte Kühlwasser wieder abgekühlt wird. Das abgekühlte Kühlwasser durchläuft danach eine Polarisationseinrichtung 27, in der die zwischen zwei Elektroden auftretende Spannung die im Kühlwasser gelösten natürlichen Mineralien in die Hydroxydformen überführt, wodurch Ausfällungen und Inkrustationen der Mineralien verhindert werden. Im weiteren Verlauf der Kühlwasserleitung 22 ist ein Temperatursensor 28 und ein Leitfähigkeitssensor 30 angeordnet. Das den Leitfähigkeitssensor 30 passierende Kühlwasser strömt weiter durch die Kühlwasserleitung 22 zu dem Verdichter 12, in den es über Einspritzdüsen einerseits im Bereich der Rotore des Schraubenverdichters 12 eingespritzt wird, andererseits aber auch über eine Lagerleitung 32 in Gleitlager des Schraubenverdichters 12 eingespritzt wird. Im Verlauf der Lagerleitung 32 ist ein Rückschlagventil 34 und ein Strömungswächter 36 angeordnet.

Über eine Abflußleitung 23 mit einem Abflußleitungsventil 24 kann Kühlwasser aus der Kühlwasserleitung 22 abgeführt werden, wenn zu viel Kühlwasser in dem Kühlwasserkreislauf 20 zirkuliert.

An dem Absetzbehälter 16 ist ein pH-Wert-Sensor 31 vorgesehen, der den pH-Wert der Kühlwassers in dem Absetzbehälter 16 mißt.

Die Verdichteranlage 10 weist ferner eine Wasserlieferquelle 40 auf, von der ggf. aufbereitetes Wasser dem Kühlwasser zugeführt werden kann. Die Wasserlieferquelle 40 dient der Bereitstellung von entsalztem und nicht-entsalztem Wasser, das durch eine Ausgangsleitung 42 der Wasserlieferquelle 40 in den Kühlmittelkreislauf 20 eingespeist wird.

Über eine Zulaufleitung 44 fließt der Wasserlieferquelle 40 wahlweise Wasser aus einer mit dem Trinkwassernetz verbundenen Leitung 46 oder Kühlwasser aus einer Abzweigungsleitung 48 zu. Die Abzweigungsleitung 48 zweigt zwischen der Polarisationseinrichtung 27 und dem Temperatursensor 28 von der Kühlwasserleitung 22 ab, so daß ein Teil des Kühlwassers über die den Verdichter 12 umgehende Abzweigungsleitung 48 zu der Wasserlieferquelle 40 abzweigbar ist. Im Verlauf der Abzweigungsleitung 48 ist ein Steuerventil 50, ein Rückschlagventil 34 mit Durchlaß in Richtung Wasserlieferquelle sowie ein Partikelfilter 26 angeordnet. Die Trinkwasser-Leitung 46 weist einen Absperrhahn 52 und ebenfalls ein in Richtung der Wasserlieferquelle 40 durchgängiges Rückschlagventil 34 auf.

Die Trinkwasser-Leitung 46 und die Kühlwasser-Abzweigungsleitung 48 münden in die Zulaufleitung 44, in deren weiterem Verlauf ein weiterer Partikelfilter 25 angeordnet ist. Die Zulaufleitung 44 mündet schließlich in einem Entsalzungsgerät 54, das als Mischbettionenaustaucher ausgebilet sein kann. Das Entsalzungsgerät 54 kann aber auch als Umkehrosmose-Vorrichtung ausgebildet sein. In dem Mischbettionenaustauscher 54 werden stark saure und stark basische Austauscher eingesetzt, die dem zu behandelnden Wasser annähernd alle Kationen und Anionen entziehen. Das auf diese Weise entionisierte, d.h. entsalzte Wasser hat ungefähr eine Leitfähigkeit von 0,1 µS/cm bis 0,2 µS/cm bei 25 °C. Durch das Entsalzungsgerät 54 wird das zugeführte nicht-entionisierte Wasser also entionisiert, d.h. zu über 90 % entsalzt. Das aus einer Ausgangsleitung 55 des Entsalzugsgerätes 54 austretende entionisierte Wasser hat also einen geringen Salzgehalt und dadurch eine geringe Leitfähigkeit sowie einen niedrigen pH-Wert.

Im Verlauf der Entsalzungsgerät-Ausgangsleitung 55 ist ein Steuerventil 56 angeordnet, durch das die Ausgangsleitung 55 geöffnet oder geschlossen werden kann.

Parallel zu dem Entsalzungsgerät 54 ist eine Umgehungsleitung 58 vorgesehen, die unter Umgehung des Entsalzungsgerätes 54 die Zulaufleitung 44 der Wasserlieferquelle 40 mit der Ausgangsleitung 42 der Wasserlieferquelle 40 verbindet. Auch im Verlauf der Umgehungsleitung 58 ist ein Steuerventil 60 angeordnet. Das durch die Trinkwasser-Lleitung 44 oder die Kühlwasser-Abzweigungsleitung 48 der Wasserlieferquelle 40 zufließende Wasser kann je nach Schaltung der Ventile 56,60 der Wasserlieferquelle 40 durch das Entsalzungsgerät 54 oder an dem Entsalzungsgerät 54 vorbei direkt zu der Ausgangsleitung 42 geleitet werden.

Die Ausgangsleitung 42 teilt sich wiederum in zwei Leitungszweige auf: Zum einen ist die Ausgangsleitung 42 über eine Verbindungsleitung 62 mit der Lagerleitung 32 des Kühlkreislaufes 20 verbunden und mündet vor dem Strömungswächter 36 in die Lagerleitung 32. Auch in der Verbindungsleitung 62 ist ein Rückschlagventil 34 vorgesehen, dessen Durchlaßrichtung in Richtung der Lagerleitung 32 gewählt ist. Zum anderen führt eine Einleitungsleitung 64 von der Ausgangsleitung 42 der Wasserlieferquelle 40 zu einem Wassereinlaß 65 in dem Luft-Ansaugkanal 14. Im Verlauf der Einleitungsleitung 64 ist ebenfalls ein Rückschlagventil 34 sowie ein Steuerventil 66 angeordnet.

Mit einem pH-Wert-Sensor 31 kann in dem Absetzbehälter 16 der pH-Wert gemessen werden. Die pH-Wert-Messung ist jedoch nicht immer zuverlässig und kann daher nicht als primäre Regelgröße verwendet werden.

Die Membranfilter 26 verhindern eine unkontrollierte Keimentwicklung in dem Kühlsystem bzw. dem Entsalzungsgerät 54.

Über elektrische Steuerleitungen 68 sind alle vier Steuerventile 50,56,60,66 von einer Regelvorrichtung 70 steuerbar, also schaltbar. Die vier Sensoren 26,28, 30,36 der Verdichteranlage 10 sind über Meßleitungen 72 mit der Regelvorrichtung 70 verbunden, so daß die Meßdaten der Sensoren 26,28,30,36 von der Regelvorrichtung 70 empfangen und eingelesen werden können.

Beim Betrieb des Verdichters 12 unterliegt das in dem Kühlwasserkreislauf 20 zirkulierende Kühlwasser vielen Einflüssen, die die Zusammensetzung und die Eigenschaften des Kühlwassers ständig verändern. Verantwortlich dafür sind chemische, elektrochemische als auch physikalische Vorgänge. Dadurch werden insbesondere der pH-Wert sowie der Salzgehalt des Kühlwassers verändert. Beispielsweise fällt in den Sommermonaten und insbesondere in tropischen Gegenden sehr viel in der angesaugten Luft enthaltene Feuchtigkeit in Form von Kondensat aus, das in dem Verdichter 12 bzw. in dem Absetzbehälter 16 in den Kühlwasserkreislauf gelangt. Dadurch kann das Kühlwasser hinsichtlich seines Salzgehaltes verdünnt werden, so daß sich der relative Salzgehalt des Kühlwassers verringert. Beim Verdichten sehr trockener kalter Luft dagegen kann dem Kühlwasser verdunstendes Wasser entzogen werden, das durch die verdichtete erwärmte Luft aufgenommen und abgeführt wird. Dadurch erhöht sich der relative Salzgehalt des Wassers. Ein zu hoher Salzgehalt führt zu Sedimentierung, d.h. zum Ausfällen von Sedimenten aus dem Kühlwasser. Die Sedimente können die Dichtspalte, Dichtungen, Ventile etc. des Verdichters 12 beschädigen oder zerstören. Bei zu geringem Salzgehalt verringert sich die Pufferfähigkeit des Kühlwassers hinsichtlich der Absorbierung von in der angesaugten Luft enthaltener Kohlensäure. Bei geringer Pufferfähigkeit des Kühlwassers kann nicht mehr genügend Kohlensäure aus der verdichteten Luft aufgenommen werden. Durch die nicht abgepufferte freie Kohlensäure in dem Kühlwasser wird wiederum der pH-Wert gesenkt, d.h. das Kühlwasser bekommt einen aggressiven korrodierenden Charakter.

Ein bzgl. der Korrosion möglichst neutrales Kühlwasser sollte etwa den pH-Wert 7 haben. Keinesfalls sollte der pH-Wert jedoch den Bereich zwischen 6,5 und 7,5 verlassen, da sonst bereits Korrosion auftreten kann.

Der Salzgehalt von Wasser wird in der Regel über die Messung der Wasserleitfähigkeit bestimmt. Im vorliegenden Beispiel soll die Leitfähigkeit des Kühlwassers stets zwischen 10 und 20 µS/cm (bei 25 °C) betragen. Die Leitfähigkeit wird durch den Leitfähigkeitssensor 30 gemessen und von der Regelungsvorrichtung 70 empfangen, ausgewertet und in entsprechende Steuerungsmaßnahmen und Befehle umgesetzt.

Der von dem Leitfähigkeitssensor 30 gemessene Leitfähigkeitswert wird in der Regelvorrichtung 17 entsprechend der von dem Temperatursensor 28 gemessenen Temperatur kompensiert, also normiert. Dies ist erforderlich, da die Leitfähigkeit des Wassers in hohem Maße temperaturabhängig ist.

Bei einer Überschreitung des oberen Leitfähigkeits-Grenzwertes von 20 µS/cm öffnet die Regelvorrichtung 70 das Steuerungsventil 56 in der Ausgangsleitung 55 des Entsalzungsgerätes 54. Dadurch kann nicht-entsalztes Wasser durch die Zulaufleitung 44 und durch das Entsalzungsgerät 54 fließen und dabei entsalzt werden. Das entsalzte, also entionisierte, Wasser fließt über die Wasserlieferquellen-Ausgangsleitung 42 und die Einleitungsleitung 64 zu dem Wassereinlaß 65, wo das entsalzte Wasser in den Luft-Ansaugkanal 14 eingeleitet wird. Das eingeleitete entsalzte Wasser gelangt zusammen mit der angesaugten Luft in den Verdichter 12 und wird schließlich in dem Absetzbehälter 16 von der verdichteten Luft wieder getrennt. Es gelangt auf diesem Weg in den Kühlwasserkreislauf 20 und verändert dort den Salzgehalt. Dem Kühlwasserkreislauf 20 wird auf diesem Weg solange entsalztes Wasser zugeführt, bis der von dem Leitfähigkeitssensor 30 gemessene Leitfähigkeitswert den oberen Leitfähigkeits-Grenzwert von 20 µS/cm wieder unterschritten hat.

Bei Unterschreitung des unteren Leitfähigkeits-Grenzwertes von 10 µS/cm wird das nicht-entsalzte Wasser aus der Trinkwasserleitung 46 nicht durch das Entsalzungsgerät 54, sondern über die Umgehungsleitung 58 durch Öffnen des Steuerventils 60 direkt zur Ausgangsleitung 42 geleitet. Auch das nicht-entsalzte Wasser wird dann über die Einleitungsleitung 64 in den Gas-Ansaugkanal 14 eingeleitet.

Wenn bei Unterschreitung des unteren Leitfähigkeits-Grenzwertes von der Wasserlieferquelle 40 entsalztes Wasser zur Verfügung gestellt werden muß, kann dazu entweder das Trinkwasser aus der Leitung 46 oder das über die Abzweigleitung 48 zugeleitete Kühlwasser entsalzt werden. Bei normalem Betrieb wird bei Überschreitung des oberen Leitfähigkeits-Grenzwertes, d.h. bei unerwünschtem Ansteigen des Salzgehaltes in dem Kühlwasser, das über die Abzweigungsleitung 48 der Wasserlieferquelle 40 zugeführte Kühlwasser entsalzt. Bei dieser Vorgehensweise wird das Entsalzungsgerät 54 geschont und die Standzeit zur Regeneration verlängert. Der Zufluß des Wassers zu der Wasserlieferquelle 40 wird durch entsprechende Steuerung der Steuerventile 50,52 der Trinkwasserleitung 46 und der Abzweigungsleitung 48 reguliert.

Von dem pH-Wert-Sensor 31 wird kontinuierlich der pH-Wert des Kühlwassers in dem Absetzbehälter 16 gemessen. Bei Unterschreitung eines pH-Wertes von 6,5 wird von der Wasserlieferquelle 40 nicht-entsalztes Wasser in den Kühlwasserkreislauf eingespeist, bis der pH-Wert wieder über 6,5 liegt. Bei Überschreitung eines pH-Wertes von von 7,5 dagegen wird in dem Entsalzungsgerät 54 entsalztes Wasser dem Kühlwasserkreislauf 20 zugeführt. Die Korrektur des pH-Wertes erfolgt jedoch stets nur in dem Maße, in dem die vorgegebenen Leitfähigkeitswerte des Kühlwassers eingehalten werden. Das bedeutet, daß die Einhaltung der vorgegebenen Leitfähigkeitswerte Priorität hat vor der Regelung des pH-Wertes.

Vor dem Anlaufen des Verdichters 12, d.h. vor Beginn der Rotation der Rotoren, müssen die Gleitlager des Verdichters 12 mit Wasser gefüllt werden, um beim Anlaufen des Verdichters eine verschleißträchtige Mischreibung zu vermeiden. Die Gleitlager können jedoch nicht durch das Wasser des Kühlwasserkreislaufs 20 gefüllt werden, da der Kühlwasserkreislauf 20 noch nicht unter Druck steht.

Zum Befüllen der Gleitlager des Verdichters 12 vor Anlauf des Verdichters 12 wird das von der Trinkwasserleitung 46 gelieferte Trinkwasser eingesetzt, das in der Regel ungefähr einen Druck von 3,5 bar aufweist. Das zugeleitete Trinkwasser wird in der Wasserlieferquelle 40 in bekannter Weise derart aufbereitet, daß seine Leitfähigkeit ungefähr in dem Bereich von 10 bis 20 µS/cm liegt. Erst nachdem die Gleitlager des Verdichters 12 auf diese Weise mit Wasser gefüllt worden sind, können die Rotoren des Verdichters 12 anlaufen.

Da sich innerhalb des Verdichters sehr schnell der Arbeitsdruck von 8 bis 10 bar einstellt, können die Gleitlager nach dem Anlaufen nicht mehr durch das aufbereitete Wasser aus dem Trinkwassernetz gespeist werden, da sein Druck mit 3,5 bar dazu zu niedrig ist. Die Schmierung der Gleitlager wird daher nach dem Anlaufen des Verdichters 12 durch das Kühlwasser geleistet, das über die Lagerleitung 32 in die Gleitlager des Verdichters 12 eingeleitet wird. Dies ist deshalb möglich, weil das Kühlwasser stets ungefähr den Arbeitsdruck des Verdichters 12 aufweist.

Da Gleitlager sehr empfindlich gegen Ausfall der Wasserschmierung sind, wird der Zustrom zu den Gleitlagern über die Lagerleitung 32 durch den Strömungswächter 36 überwacht. Sobald der Strömungswächter 36 eine zu geringe Wasserströmung meldet, schaltet die Regelvorrichtung 70 den Motor 13 ab, so daß die Rotoren des Verdichters 12 zum Stillstand kommen.

Sollte bei Überschreitung des oberen Leitfähigkeits-Grenzwertes von 20 µS/cm und Einspeisung von entsalztem Wasser innerhalb eines festgesetzten Zeitraums keine ausreichende Leitfähigkeitsänderung eintreten, so kann von der Erschöpfung der Kapazität des Entsalzungsgerätes 54 ausgegangen werden. In diesem Fall meldet die Regelvorrichtung 70 über eine nicht dargestellte Anzeigevorrichtung die Erschöpfung des Entsalzungsgerätes 40 und schaltet ggf. den Motor 13 des Verdichters 12 ab.

Mit der beschriebenen Regelung des Salzgehaltes des Kühlwassers über die Leitfähigkeitsmessung ist eine Verdichteranlage geschaffen, mit der hohe Anforderungen an die Kühlwasserqualität unabhängig von klimatischen Verhältnissen, der Trinkwasserqualität, dem Aufstellungsort usw. erreicht werden. Dadurch sind Verdichter mit sehr engen Dichtspalten realisierbar. Ferner wird durch die indirekte Regelung des pH-Wertes des Kühlwassers Korrosion der Verdichteranlage vermieden. Für die Verdichteranlage können daher weniger edle und preiswertere Materialien bei gleichzeitig verlängerter Lebensdauer verwendet werden.

## Patentansprüche

1. Verdichteranlage mit einem Verdichter (12) mit Wassereinspritzkühlung in einem Kühlwasserkreislauf (20) ,
**gekennzeichnet durch**
eine Meßvorrichtung (30) in dem Kühlwasserkreislauf (20) zur Bestimmung des Leitfähigkeits-Wertes des Kühlwassers,
eine Wasserlieferquelle (40) zur Lieferung von nicht-entsalztem Wasser und von entsalztem Wasser und
eine Regelvorrichtung (70), die bei Überschreitung eines oberen Leitfähigkeits-Grenzwertes die Einleitung von entsalztem und bei Unterschreitung eines unteren Leitfähigkeits-Grenzwertes die Einleitung von nicht-entsalztem Wasser der Wasserlieferquelle (40) in den Kühlwasserkreislauf (20) veranlaßt.

2. Verdichteranlage nach Anspruch 1, **dadurch gekennzeichnet, daß** die Wasserlieferquelle (40) ein Entsalzungsgerät (54), dem nicht-entsalztes Wasser zugeführt wird, und eine Umgehungsleitung (58) zum Überbrücken des Entsalzungsgeräts (54) aufweist, wobei Ventile (56,60) vorgesehen sind, die entweder das Entsalzungsgerät (54) oder die Umgehungsleitung (58) mit dem Verdichter (12) verbinden.

3. Verdichteranlage nach Anspruch 1 oder 2, **dadurch gekennzeichnet, daß** eine Abzweigungsleitung (48) von dem Kühlwasserkreislauf (20) zu einem Zulauf (44) der Wasserlieferquelle (40) vorgesehen ist, wobei durch die Abzweigungsleitung (48) Wasser des Kühlwasserkreislaufs (20) der Wasserlieferquelle (40) zugeführt werden kann.

4. Verdichteranlage nach einem der Ansprüche 1-3, **dadurch gekennzeichnet, daß** eine von der Wasserlieferquelle (40) in den Ansaugkanal (14) des Verdichters (12) führende Einleitleitung (64) vorgesehen ist.

5. Verdichteranlage nach einem der Ansprüche 1-4, **dadurch gekennzeichnet, daß** das Entsalzungsgerät (54) als Ionenaustauscher oder Umkehrosmose-Vorrichtung ausgebildet ist.

6. Verdichteranlage nach einem der Ansprüche 1-5, **dadurch gekennzeichnet, daß** der Verdichter (12) Gleitlager aufweist und das Wasser der Wasserlieferquelle (40) über eine Verbindungsleitung (62) direkt mit den Gleitlagern verbunden ist.

7. Verdichteranlage nach einem der Ansprüche 4-6, **dadurch gekennzeichnet, daß** eine Steuervorrichtung (70) vorgesehen ist, die bewirkt, daß vor Anlauf des Verdichters (12) Wasser aus der Wasserlieferquelle (40) in Lager des Verdichters (12) einspritzt wird, und nach Anlauf des Verdichters (12) in den Ansaugkanal (14) eingeleitet wird.

8. Verdichteranlage nach einem der Ansprüche 1-7, **dadurch gekennzeichnet, daß** im Kühlwasserkreislauf (20) ein Temperatursensor (28) für die Temperaturkompensation der Leitfähigkeitsmessung vorgesehen ist.

9. Verdichteranlage nach einem der Ansprüche 1-8, **dadurch gekennzeichnet, daß** die Wasserlieferquelle (40) an das Trinkwassernetz angeschlossen ist.

10. Verdichteranlage nach einem der Ansprüche 1-9, **dadurch gekennzeichnet, daß** eine mit der Regelvorrichtung (70) verbundene pH-Wert-Meßvorrichtung (31) zur Messung des pH-Wertes des Kühlwassers vorgesehen ist, wobei die Regelvorrichtung (70) die Wasserlieferquelle (40) derart steuert, daß der pH-Wert des Kühlwassers ungefähr im Bereich von 7,0 bleibt.

## Claims

1. A compressor system comprising a water-injection cooled compressor (12) in a cooling water circuit (20),
**characterized by**
a measuring device (30) in the cooling water circuit (20) to determine the conductivity of the cooling water,
a water supply source (40) to supply non-desalinated water and desalinated water, and
a controlling means (70) which causes the introduction of desalinated water, when the conductivity exceeds an upper conductivity limit, and the introduction of non-desalinated water, when the conductivity falls below a lower conductivity limit, from the water supply source (40) into the cooling water circuit (20).

2. The compressor system of claim 1, **characterized in that** the water supply source (40) comprises a desalinization device (54) fed with non-desalinated water and a bypass (58) to bypass the desalinization device (54), valves (56,60) being provided either connecting the desalinization device (54) or the bypass (58) to the compressor.

3. The compressor system of claim 1 or 2, **characterized in that** a branch conduit (48) from the cooling water circuit (20) is provided to an inlet (44) of the water supply source (40), water from the cooling water circuit (20) being able to be supplied to the water supply source (40) via the branch conduit (48).

4. The compressor system of one of claims 1-3, **characterized in that** an inlet conduit (64) leading from the water supply source (40) into the take-in duct (14) of the compressor (12) is provided.

5. The compressor system of one of claims 1-4, **characterized in that** the desalinization device (54) is provided as an ion exchanger or as a reversed osmosis device.

6. The compressor system of one of claims 1-5, **characterized in that** the compressor (12) comprises sliding bearings and the water of the water supply source (40) is connected directly to the sliding bearings via a connection conduit (62).

7. The compressor system of one of claims 4-6, **characterized in that** a controlling means (70) is provided, which causes water from the water supply source (40) to be injected into the bearing of the compressor (12) before the compressor starts working, and to be introduced into the take-in duct (14) after the compressor has started working.

8. The compressor system of one of claims 1-7, **characterized in that** a temperature sensor (28) is provided in the cooling water circuit (20) to compensate for the temperature when measuring the conductivity.

9. The compressor system of one of claims 1-8, **characterized in that** the water supply source (40) is connected to the drinking water net.

10. The compressor system of one of claims 1-9, **characterized in that** a pH-value measuring device (31) connected to the controlling means (70) for measuring the pH-value of the cooling water is provided, the controlling means (70) controlling the water supply source (40) such that the pH-value of the cooling water remains at approximately 7.0.

## Revendications

1. Installation de compresseur comportant un compresseur (12) à refroidissement par injection d'eau dans un circuit (20) d'eau de refroidissement, **caractérisé par** un dispositif (30) de mesure dans le circuit (20) d'eau de refroidissement pour déterminer la valeur de la conductivité de l'eau de refroidissement, une source (40) d'approvisionnement en eau pour l'approvisionnement en eau non dessalée et en eau dessalée et un dispositif (70) de régulation qui, en cas de dépassement d'une valeur limite supérieure de la conductivité, déclenche l'introduction d'eau dessalée de la source d'approvisionnement en eau (40) dans le circuit (20) d'eau de refroidissement et d'eau non dessalée de la source (40) d'approvisionnement en eau en cas de franchissement par le bas d'une valeur limite inférieure de la conductivité.

2. Installation de compresseur selon la revendication 1, **caractérisée en ce que** la source (40) d'approvisionnement en eau présente un appareil (54) de dessalement auquel de l'eau non dessalée est apportée et une canalisation (58) de dérivation pour contourner l'appareil (54) de dessalement, des vannes (55, 60) étant prévues qui relient au compresseur (12) soit l'appareil (54) de dessalement soit la canalisation (58) de dérivation.

3. Installation de compresseur selon la revendication 1 ou 2, **caractérisée en ce qu'**une canalisation (48) d'embranchement depuis le circuit (20) d'eau de refroidissement vers une entrée (44) de la source (40) d'approvisionnement en eau est prévue, de l'eau du circuit (20) d'eau de refroidissement pouvant être dirigée vers la source (40) d'approvisionnement en eau par la canalisation (48) d'embranchement.

4. Installation de compresseur selon l'une quelconque des revendications 1 à 3, **caractérisée en ce qu'**une canalisation (64) d'introduction est prévue, conduisant de la source (40) d'approvisionnement en eau vers le canal (14) d'aspiration du compresseur (12).

5. Installation de compresseur selon l'une quelconque des revendications 1 à 4, **caractérisée en ce que** l'appareil (54) de dessalement est constitué en tant qu'échangeur d'ions ou dispositif à osmose inverse.

6. Installation de compresseur selon l'une quelconque des revendications 1 à 5, **caractérisée en ce que** le compresseur (12) présente des paliers lisses et que l'eau de la source (40) d'approvisionnement en eau est directement raccordée avec les paliers lisses par une canalisation (62) de raccordement.

7. Installation de compresseur selon l'une quelconque des revendications 4 à 6, **caractérisée en ce qu'**un dispositif (70) de commande est prévu dont l'effet est que, avant le démarrage du compresseur (12) de l'eau de la source (40) d'approvisionnement en eau est injectée dans des paliers du compresseur (12) et introduite dans le canal (14) d'aspiration après le démarrage du compresseur (12).

8. Installation de compresseur selon l'une quelconque des revendications 1 à 7, **caractérisée en ce qu'**un capteur (28) de température est prévu dans le circuit (20). d'eau de refroidissement, pour la compensation en température de la mesure de la conductivité.

9. Installation de compresseur selon l'une quelconque des revendications 1 à 8, **caractérisée en ce que** la source (40) d'approvisionnement en eau est raccordée au réseau d'eau potable.

10. Installation de compresseur selon l'une quelconque des revendications 1 à 9, **caractérisée en ce qu'**un dispositif (31) de mesure de pH relié au dispositif (70) de régulation pour mesurer la valeur du pH de l'eau de refroidissement est prévu, le dispositif (70) de régulation commandant la source (40) d'approvisionnement en eau de manière telle que la valeur pH de l'eau de refroidissement demeure environ dans le domaine des 7,0.
